Europäisches Patentamt

European Patent Office

Office européen des brevets

(11) Numéro de publication: **0 251 920 B1**

# FASCICULE DE BREVET EUROPEEN

(45) Date de publication de fascicule du brevet:
08.05.91

(51) Int. Cl.⁵: **G02B 27/14, G02B 23/14**

(21) Numéro de dépôt: 87401498.8

(22) Date de dépôt: 30.06.87

(54) Dispositif d'alignement mutuel polychromatique et appareil de visée en comportant application.

(30) Priorité: 02.07.86 FR 8609611

(43) Date de publication de la demande:
07.01.88 Bulletin 88/01

(45) Mention de la délivrance du brevet:
08.05.91 Bulletin 91/19

(84) Etats contractants désignés:
CH DE GB IT LI SE

(56) Documents cités:
DE-A- 2 629 820
FR-A- 2 535 472
US-A- 4 422 758

RESEARCH DISCLOSURE, no. 188, décembre 1979, pages 682-683, no. 18820, Vant., Hants, GB; "Beam-combining prism element"

RADIO ENGINEERING AND ELECTRONIC PHYSICS, vol. 18, no. 7, juillet 1973, pages 1097-1100, Washington, US; YU.I. KOLESOV et al.: "A study of beamsplitters for the Far IR"

(73) Titulaire: **SOCIETE D'APPLICATIONS GENERALES D'ELECTRICITE ET DE MECANIQUE SAGEM**
**6, Avenue d'Iéna**
**F-75783 Paris Cédex 16(FR)**

(72) Inventeur: **Sud, Emmanuel**
**142, rue du Faubourg Saint Denis**
**F-75010 Paris(FR)**
Inventeur: **Lelay, Jean-Pierre**
**33, rue Kléber**
**F-95100 Argenteuil(FR)**
Inventeur: **Encaoua, Serge**
**55, rue Martre**
**F-92110 Clichy(FR)**

(74) Mandataire: **Fort, Jacques et al**
**CABINET PLASSERAUD 84, rue d'Amsterdam**
**F-75009 Paris(FR)**

## Description

L'invention concerne le domaine des appareils de visée comportant plusieurs organes travaillant dans des domaines différents du spectre optique et elle trouve une application particulièrement importante dans les appareils de visée destinés aux systèmes d'armes.

A l'heure actuelle, on utilise largement des appareils de visée, stabilisés on non, comportant un détecteur sensible au rayonnement dans le domaine visible (lunette de visée ou caméra de télévision), un détecteur sensible à l'infrarouge lointain (caméra thermique) et un illuminateur ou télémètre laser travaillant dans l'infrarouge proche. Il est nécessaire de réaliser un alignement mutuel des voies optiques correspondant à ces différents appareils. Cette opération, souvent qualifiée d'harmonisation, exige de disposer d'une référence optique commune collimatée émettant dans les différents domaines de sensibilité.

La solution qui vient immédiatement à l'esprit consiste à utiliser un miroir escamotable permettant d'envoyer à la demande, vers les divers détecteurs, l'émission d'un trou formant source et ayant un éclairement suffisant dans les différents domaines du spectre. Le miroir escamotable, suivant sa position, dirige l'émission du trou source vers les détecteurs ou libère le champ de vision de ces derniers. Dans la pratique, cette solution n'est pas satisfaisante. Il est très difficile de réaliser une source pouvant éclairer de façon homogène le trou dans les divers domaines du spectre. Si l'on utilise une lampe à halogène dont le filament émet dans le visible et dont l'ampoule émet dans l'infrarouge, on se heurte à un double problème : du fait que le filament et l'ampoule sont à des distances différentes du trou de source, l'éclairement n'est pas homogène. De plus, pour de nombreuses applications, et notamment sur des véhicules, le filament est rapidement détruit par les vibrations. Il n'est pas possible de régler les éclairements indépendamment pour les différents domaines du spectre considérés. De plus, on se heurte toujours au problème de trouver des matériaux transparents pour l'ensemble des domaines du spectre à transmettre.

L'invention vise à fournir un dispositif d'alignement mutuel polychromatique répondant mieux que ceux antérieurement connus aux exigences de la pratique, notamment en ce qu'il permet d'équilibrer les éclairements et le diamètre angulaire de la source dans les différents domaines spectraux et écarte dans une large mesure les problèmes d'aberration.

Dans ce but, l'invention propose notamment un dispositif d'alignement mutuel polychromatique comprenant un mélangeur optique ayant au moins deux trous éclairés chacun en lumière émise dans l'un des domaines spectraux pour lesquels l'alignement doit être réalisé et une lame de combinaison des deux émissions suivant un faisceau commun de sortie du bloc et comprenant un miroir parabolique placé de façon à recevoir le faisceau de sortie sous un angle par rapport à son axe, le mélangeur et le miroir étant constitués de façon que tous les trous formant source soient au foyer du miroir.

Grâce à l'emploi d'un miroir parabolique, on supprime l'aberration sphérique et on peut obtenir un faisceau bien collimaté. La réalisation d'un miroir réfléchissant depuis le visible jusqu'à l'infrarouge lointain ne présente en effet pas de problème particulier.

Dans un mode avantageux de réalisation, le mélangeur comporte un premier bloc, qui peut être en matériau opaque à l'infrarouge lointain, percé de deux passages perpendiculaires et dans l'alignement des trous, la lame étant située à l'intersection des deux passages pour transmettre l'émission provenant de celui des trous qui constitue source dans l'infrarouge lointain et pour réfléchir l'autre.

Grâce à cette disposition, la lame seule est traversée par l'émission dans l'infrarouge lointain, dans une zone où elle n'est pas collée. Grâce à la présence d'un passage, on réduit considérablement l'effet de chromatisme et on élimine le problème de l'absorption des colles dans l'infrarouge lointain.

Lorsque, comme ce sera le cas le plus fréquent, le dispositif doit permettre l'alignement mutuel dans trois plages de fréquence, comportant, en plus de l'infrarouge lointain, le visible et l'infrarouge proche, le mélangeur comportera un second bloc accolé au premier, constitué par un cube mélangeur en matériau transparent dans le visible et dans l'infrarouge proche, muni de deux trous sources sur deux faces orthogonales et présentant une lame dichroïque combinant l'émission des deux trous sources suivant un faisceau situé dans l'alignement du second passage du premier bloc.

L'invention propose également un appareil de visée comprenant un dispositif d'alignement mutuel tel que défini ci-dessus, associé à des moyens permettant à la demande d'envoyer son faisceau de sortie vers les organes détecteurs de l'appareil de visée ou de libérer le champ de vision de ce dernier.

L'invention sera mieux comprise à la lecture de la description qui suit d'un mode particulier de réalisation donné à titre d'exemple non limitatif. La description se réfère aux dessins qui l'accompagnent, dans lesquels :

- la Figure 1 est une vue schématique d'un dispositif d'alignement polychromatique, en coupe suivant un plan passant par l'axe des différents faisceaux lumineux ;

- la Figure 2 est un schéma de principe montrant une disposition possible des différents éléments d'un appareil de visée muni d'un dispositif suivant la Figure 1.

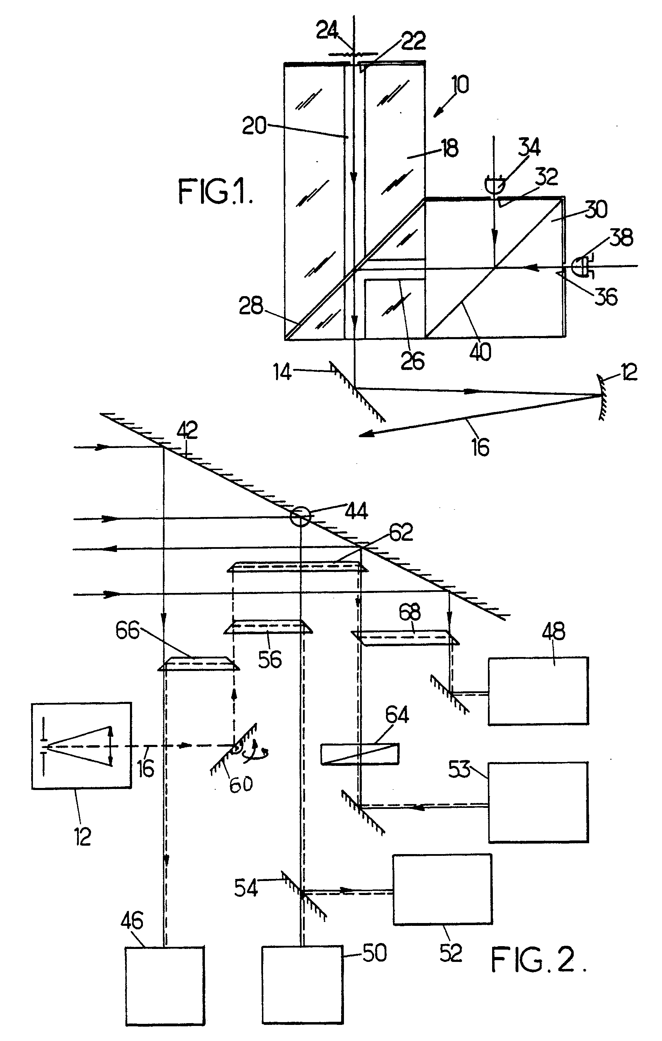

Le dispositif d'alignement montré en Figure 1 est destiné à permettre l'harmonisation entre trois voies et, pour cette raison, à fournir un faisceau unique collimaté présentant une composante spectrale dans trois plages de longueurs d'onde :

8 à 12 $\mu$m (infrarouge lointain)

0,65 $\mu$m (lumière visible)

0,93 $\mu$m (infrarouge proche).

Ce dispositif comporte un mélangeur optique 10 et un miroir parabolique 12 qui reçoit le faisceau de sortie du mélangeur 10, par l'intermédiaire d'un miroir plan de renvoi 14 dans le mode de réalisation représenté. Le miroir parabolique est destiné à former, à partir du faisceau divergent qu'il reçoit, un faisceau parallèle collimaté de sortie 16. Pour éviter l'effet d'ombre du miroir 14, le faisceau de lumière doit arriver sur le miroir 12 avec une légère incidence par rapport à l'axe. Les miroirs 12 et 14 comportent un traitement de surface les rendant réfléchissants dans l'ensemble du spectre du faisceau reçu et renvoyé.

Le mélangeur optique 10 comporte un premier bloc 18 dans lequel est ménagé un premier passage 20 traversé par la lumière émise par un trou 22 formant source, éclairé en lumière présentant une énergie importante dans l'infrarouge lointain. Cet éclairage peut être assuré par un filament 24 en métal noble, chauffé par passage d'un courant électrique. On peut notamment utiliser un alliage platine-rhodium ou un alliage pour la constitution de résistances fonctionnant à hautes températures, tel que l'"ALFERON" qui permet d'atteindre une température de 1100°C.

Dans le bloc 18 est ménagé un second passage 26, orthogonal au premier, destiné à être traversé par la lumière provenant de sources dans le visible et l'infrarouge proche. Le mélange des flux lumineux est assuré par une lame mince 28, transparente dans la plage allant de 8 à 12 $\mu$m et réfléchissante dans l'infrarouge proche et le visible. Cette lame peut notamment être constituée en séléniure ou en sulfure de zinc. La lame 28 est placée entre deux tronçons du bloc 18 et collée sur ces tronçons. Etant donné l'absence de colle au droit du passage 20, on écarte les difficultés de trouver une colle ayant de bonnes qualités adhésives et transparente dans l'ensemble du spectre considéré. De plus, il n'est pas nécessaire de constituer le bloc 18, et notamment la fraction de ce bloc par laquelle sort le faisceau, en un matériau transparent dans l'ensemble du spectre.

Le mélangeur 10 comprend un second bloc 30 destiné à envoyer dans le passage 26 un faisceau contenant la lumière visible provenant d'une source 32, constituée par exemple par une diode électroluminescente 34 émettant dans le rouge, et la lumière infrarouge provenant d'une source 36 constituée également par un trou illuminé par une diode électroluminescente 38 émettant dans le proche infrarouge. Il est avantageux d'utiliser des diodes électroluminescentes car elles ont une émission pratiquement monospectrale, ce qui fait disparaître les problèmes de chromatisme. De plus, on dispose de diodes électroluminescentes ayant une surface émissive suffisamment grande pour couvrir la surface de trous sources 32 et 36 de dimension appropriée. On peut notamment utiliser, comme diode 34, une diode de type HLMP 3750 (Hewlett Packard) dont l'émission se place à 640 nm et, comme diode électroluminescente 38, une diode TIES 16A (Texas Instrument) émettant à 930 nm. De telles diodes et un filament 24 en matériau noble présentant une résistance mécanique satisfaisante, même dans un très large domaine thermique (-30°C à +70°C) même en ambiance vibratoire.

Le second bloc 30 peut être massif, car il existe de nombreux matériaux optiques ayant une transparence suffisante dans le visible et l'infrarouge proche. On peut notamment utiliser le quartz. Le mélange des flux émis par les trous sources 32 et 36 est assuré par une lame dichroïque 40, transparente pour la raie d'émission de la diode 38 et réfléchissante dans le visible. Cette lame dichroïque 40 peut être réalisée par revêtement d'un des tronçons constituant le bloc 30 (notamment par dépôt de couches interférentielles). Les deux tronçons du bloc 30 peuvent ensuite être collés l'un à l'autre, étant donné qu'on dispose d'adhésifs présentant une transparence satisfaisante dans le domaine visible.

Les blocs 18 et 30 doivent avoir des dimensions telles que les trajets optiques depuis chacun des trous sources 22, 32 et 36 jusqu'au miroir parabolique 16 soient égaux à la distance focale de ce miroir.

Le dispositif qui vient d'être décrit peut notamment être incorporé à un appareil de visée stabilisée ayant les composants montrés en Figure 2. On ne décrira pas en détail la constitution et le montage relatif des divers composants car ils peuvent être très variés.

L'appareil de visée de la Figure 2 comprend, associés à un miroir de pointage et de stabilisation 42 tournant autour d'un axe 44 :

- une caméra thermique 46, sensible dans la plage allant de 8 à 12 $\mu$m,
- une caméra de télévision 48 utilisant une barrette ou une matrice d'éléments à transfert de charge ou CCD, sensible dans la plage de 0,45 à 1 $\mu$m,
- une voie d'observation visuelle directe à l'aide d'une lunette 50,
- un télémètre laser 52, 53 fonctionnant souvent à 1,06 μm et dont le récepteur 52 est harmonisé par construction avec la voie optique, les trajets étant communs jusqu'à une lame séparatrice dichroïque 54.

Le dispositif d'alignement 12 doit permettre d'harmoniser la voie d'observation visuelle oculaire 50 avec les lignes de visée de la caméra thermique 46 et de la caméra à CCD 48 avec des précisions respectives correspondant à la dimension d'un pixel.

Pour cela, des invariants 56 et 58 à deux positions sont prévus. Dans la position où il est montré en Figure 2, l'invariant 56 envoie le faisceau collimaté dans une plage de quelques degrés, vers la voie visible 50 et le récepteur laser 52. On peut alors aligner le faisceau collimaté avec le réticule de la lunette :
- soit manuellement à l'aide d'un miroir 60 ajustable par rotation autour de deux axes orthogonaux,
- soit automatiquement, à partir de signaux d'erreur fournis par une cellule à quatre quadrants (non représentée) placée symétriquement au réticule, et qui commandent une boucle d'asservissement du miroir 60.

L'émission laser est alors harmonisée. L'invariant 56 est escamoté et on met en place un second invariant 62. Cette harmonisation peut encore être effectuée automatiquement ou manuellement. Dans le premier cas, on peut constituer une cellule à quatre quadrants (non représentée) dont le centre est représentatif de la normale au plan de pose du télémètre laser et un circuit d'asservissement commandant les prismes d'un disporamètre 64 jusqu'à alignement du faisceau collimaté et du centre de la cellule.

On peut alors passer à l'harmonisation de la caméra thermique 46 à l'aide de l'invariant 66. L'électronique associée à la caméra 46 détermine alors la position du barycentre de la tache formée par le faisceau et incruste, sur l'écran de visualisation de l'image thermique, un réticule qui définit la ligne de visée thermique.

Enfin, la caméra à CCD 48 peut être harmonisée, à l'aide de l'invariant 62 et du prisme de renvoi 68, de la même façon que la caméra 46.

## Revendications

1. Dispositif d'alignement mutuel polychromatique , caractérisé en ce qu'il comprend un mélangeur optique (10), ayant au moins deux trous (22, 36) éclairés chacun par une émission dans l'un des domaines spectraux pour lesquels l'alignement doit être réalisé, et une lame (28) de combinaison des deux émissions suivant un faisceau commun de sortie du mélangeur; et un miroir parabolique (12) placé de façon à recevoir le faisceau de sortie sous un angle par rapport à son axe; le mélangeur et le miroir étant constitués de façon que tous les trous formant source soient au foyer du miroir.

2. Dispositif selon la revendication 1, caractérisé en ce que le mélangeur comporte un premier bloc (18) en matériau opaque à l'infrarouge lointain, percé de deux passages (20, 26) perpendiculaires et dans l'alignement des trous, la lame (28) étant située à l'intersection des deux passages pour transmettre l'émission provenant de celui des trous qui constitue source dans l'infrarouge lointain et pour réfléchir l'autre.

3. Dispositif selon la revendication 2, caractérisé en ce que le mélangeur comprend un second bloc (30) accolé au premier, constitué par un cube mélangeur en matériau transparent dans le visible et dans l'infrarouge proche, muni de deux trous sources sur deux faces orthogonales et présentant une lame dichroïque (40) combinant l'émission des deux trous sources suivant un faisceau situé dans l'alignement dudit autre second passage du premier bloc.

4. Dispositif selon la revendication 3, caractérisé en ce que le second bloc est massif et en deux tronçons séparés par la lame dichroïque (40) transparente dans le visible (ou l'infrarouge proche) et réfléchissante dans l'infrarouge proche (ou le visible).

5. Dispositif selon la revendication 2, 3 ou 4, caractérisé en ce que les trous constituant sources dans le domaine visible et dans l'infrarouge proche sont éclairés par des diodes électroluminescentes ayant une surface émissive couvrant la totalité des trous.

6. Dispositif selon l'une quelconque des revendications 1 à 5, caractérisé en ce que ladite lame de combinaison (28) est en matériau transmettant l'infrarouge lointain et réfléchissant l'infrarouge proche et le visible, par exemple en séléniure ou sulfure de zinc, et est collée, autour des passages (20, 26), entre deux tronçons constituant le premier bloc (18).

7. Dispositif selon l'une quelconque des revendications précédentes, caractérisé en ce que l'un des trous est éclairé par un filament chauffé par passage d'un courant électrique et émettant dans l'infrarouge lointain.

8. Dispositif selon la revendications 3 ou 4, caractérisé en ce que la lame dichroïque (40) est constituée par un revêtement d'un des deux tronçons constituant le second bloc.

9. Appareil de visée comprenant au moins un organe d'observation visuelle directe muni d'un réticule et une caméra fonctionnant dans une plage de longueur d'onde différente, caractérisé en ce qu'il comprend un dispositif d'alignement suivant l'une quelconque des revendications précédentes, un miroir (60) permettant d'ajuster le faisceau de sortie du dispositif sur le réticule de l'organe d'observation directe et des moyens pour déterminer l'image du faisceau ajusté formée par la caméra (46 ou 48).

## Claims

1. Polychromatic mutual alignment device, characterized in that it comprises an optical mixer (10), having at least two holes (22, 36) each lighted by an emission in one of the spectral ranges for which alignment should be carried out, and a plate (28) for combining the two emissions into a common mixer output beam; and a parabola mirror (12) placed to receive the output beam at an angle with respect to the axis thereof; the mixer and the mirror being constituted so that all source forming holes are at the focus of the mirror.

2. Device according to claim 1, characterized in that the mixer comprises a first block (18) of a material which is opaque for far infrared light, formed with two mutually perpendicular passages (20, 26) aligned with the holes, the plate (28) being located at the intersection of the two passages so as to transmit the emission from that of the holes which constitutes a source in the far infrared and for reflecting the other.

3. Device according to claim 2, characterized in that the mixer comprises a second block (30) which is adjacent to the first, consisting of a mixing cube of a material which is transparent to visible and near infrared light, formed with two source holes on two mutually orthogonal surfaces and having a dichroic plate (40) combining the emissions of the two source holes into a beam aligned with said other second passage of the first block.

4. Device according to claim 3, characterized in that the second block is solid and in two parts separated by the dichroic plate (40) which is transparent for visible (or near infrared) and reflective for near infrared (or visible) light.

5. Device according to claim 2, 3 or 4, characterized in that the holes which constitute sources in the visible range and the near infrared are lighted by light emitting diodes having an emission surface covering the whole of the holes.

6. Device according to any one of claims 1-5, characterized in that said combining plate (28) is of a material which transmits far infrared and reflects near infrared and visible light, for instance of zinc selenide or zinc sulphide and is bonded, around passages (20, 26) between two parts constituting the first block (18).

7. Device according to any one of the preceding claims, characterized in that one of the holes is lighted by a filament which is heated by an electric current and emits in the far infrared.

8. Device according to claim 3 or 4, characterized in that the dichroic plate (40) consists of a coating on one of the two parts constituting the second block.

9. A sighting apparatus comprising at least one direct visual viewing unit having a reticle and a camera unit operating in a different wavelength range, characterized in that it comprises an alignment device according to any one of the preceding claims, a mirror (60) making it possible to adjust the output beam of the device onto the reticle of the direct viewing unit and means for determining the image of the adjusted beam formed by the camera (46 or 48).

## Ansprüche

1. Vorrichtung zur gegenseitigen Ausrichtung von verschiedenfarbigen Strahlenbündeln, dadurch gekennzeichnet, daß sie einen optischen Mischer (10), der mindestens zwei Löcher (22,3) hat, wobei jedes durch eine Emission in einem der Spektralbereiche, für welchen die Ausrichtung bestimmt ist, beleuchtet ist, und eine dünne Scheibe (28) zur Vereinigung der beiden Emissionen, die das Strahlenbündel zum Ausgang des Mischers hin ausrichtet, und einen Parabolspiegel (12), der in der Weise angeordnet ist, daß das Ausgangsstrahlenbündel auf ihn unter einem bestimmten Winkel bezogen auf seine Achse fällt aufweist; der Mischer und der Spiegel sind in der Weise angeordnet, daß alle Löcher, die eine Lichtquelle bilden, im Brennpunkt des Spiegels liegen.

2. Vorrichtung nach Anspruch 1,
dadurch gekennzeichnet,
daß der Mischer einen ersten Block (18) aus einem für das ferne Infrarot undurchsichtigen Material aufweist, der von zwei zueinander rechtwinkligen, in Ausrichtung der Löcher gelegenen, Passagen (20,26) durchbrochen wird und daß die Scheibe (28), die zur Transmittierung der Emission, die von denjenigen Löchern herkommt, die eine Lichtquelle im fernen Infrarot darstellen, und zur Reflektion des übrigen Lichtes im Schnittpunkt der Passagen gelegen ist.

3. Vorrichtung nach Anspruch 2,
dadurch gekennzeichnet,
daß der Mischer einen zweiten Block (30) aufweist, der sich an den ersten anschließt und der aus einem Würfelmischer aus einem für das sichtbare Licht und nahe Infrarot durchsichtigen Material besteht, der mit zwei Lochquellen versehen ist, die auf zwei zueinander orthogonalen Seiten liegen, und der eine dichroitische Scheibe (40) enthält, die die Emission der zwei Lochquellen verbindet und in das Strahlenbündel ausrichtet, das in der besagten anderen zweiten Passage des ersten Blockes geführt wird.

4. Vorrichtung nach Anspruch 3,
dadurch gekennzeichnet,
daß der zweite Block massiv und durch eine dichroitische Scheibe (40) in zwei Stücke geteilt ist, die für das sichtbare Licht durchsichtig ist (oder für das nahe Infrarot) und das nahe Infrarot reflektiert (oder das sichtbare Licht).

5. Vorrichtung nach Anspruch 2, 3 oder 4,
dadurch gekennzeichnet,
daß die Lochquellen im Bereich des sichtbaren Lichtes liegen und im nahen Infrarot durch Elektroluminiszenzdioden beleuchtet werden, die eine emittierende Oberfläche haben und die Gesamtheit der Löcher bedecken.

6. Vorrichtung nach einem der vorangegangenen Ansprüche 1 bis 5,
dadurch gekennzeichnet,
daß die besagte Scheibe der Vereinigung (28) aus einem im fernen Infrarot transmittierenden und im nahen Infrarot und im sichtbaren Licht reflektierenden Material besteht, z.B. aus einer Selen-Metallverbindung oder aus Zinksulfit, und um die Passagen (20,26) geklebt und zwischen den Stücken des ersten Blockes (18) gelegen ist.

7. Vorrichtung nach einem der vorangehenden Ansprüche,
dadurch charakterisiert,
daß eines der Löcher durch einen Glühfaden beleuchtet wird, der aufgrund eines Durchflusses eines elektrischen Stromes erhitzt ist und im fernen Infrarot emittiert.

8. Vorrichtung nach einem der Ansprüche 3 oder 4,
dadurch gekennzeichnet,
daß die dichroitische Scheibe (40) aus einem Belag einer der beiden Stücke, die den zweiten Block bilden, besteht.

9. Visiereinrichtung, die wenigstens aus einem direkt sichtbaren Beobachtungsorgan besteht, das mit einem Achsenkreuz und einer Kamera, die für unterschiedliche Spektralbereiche funktionsfähig ist, ausgestattet ist,
dadurch gekennzeichnet,
daß sie eine Ausrichtungsvorrichtung nach einem der vorangehenden Ansprüche und einen Spiegel (60), der es erlaubt, das Ausgangsstrahlenbündel von der Vorrichtung auf das Achsenkreuz des Beobachtungsorgans direkt zu justieren und Mittel zur Bestimmung des Bildes des justierten Strahlenbündels, welches von einer der Kameras (46 oder 48) aufgenommen worden ist, aufweist.

FIG.1.

FIG.2.